# EUROPÄISCHE PATENTANMELDUNG

(11) **EP 0 943 950 A1**
(43) Veröffentlichungstag der Anmeldung: **22.09.1999**
(21) Anmeldenummer: 99250070.2
(22) Anmeldetag: 08.03.1999
(51) Int. Cl.: G02B 21/00

(54) **Verfahren zum Rastern bei der konfokalen Mikroskopie und konfokales Mikroskop**

(30) Priorität: 09.03.1998 DE 19811202
(71) Anmelder: GF Messtechnik GmbH, 14513 Teltow (DE)
(72) Erfinder: Frankowski, Gottfried, Dr., 10711 Berlin (DE); Heinrich, Hans-Helmut, 12687 Berlin (DE); Breitkreuz, Konrad, 14129 Berlin (DE)
(74) Vertreter: Hengelhaupt, Jürgen, Dipl.-Ing.

(57) **Zusammenfassung**

Die Erfindung betrifft ein Verfahren zum Rastern bei der konfokalen Mikroskopie und ein konfokales Mikroskop, wie es insbesonder zur mikroskopischen Gestaltsvermessung bzw. zur Vermessung von Oberflächenstrukturen in der 3D-Meßtechnik, Mikrosystemtechnik u.a. zur Qualitätskontrolle verwendet wird.

Die Aufgabe der Erfindung, ein gattungsgemäßes Verfahren und ein konfokales Mikroskop zu entwickeln, mit denen eine einfache, kostengünstige, zuverlässige und schnelle Rasterung von Probenoberflächen/Objektoberflächen gewährleistet sind, wird dadurch gelöst, daß die Probenoberfläche (5) innerhalb des Sichtfeldes des konfokalen Mikroskops gleichzeitig von mindestestens zwei Strahlungspunkten (13) spalten- und zeilenweise abgerastert wird, wobei die Strahlungspunkte (13) innerhalb einer Kette (10) oder einer Matrix so angeordnet werden, daß selbst bei der eingegrenzten Rasterbewegung der Kette (10) oder der Matrix das gesamte Sichtfeld des Mikroskops ohne Lücken abgerastert wird. Das erfindungsgemäße konfokale Mikroskop ist dadurch gekennzeichnet, daß ein Mikrospiegelarray sowohl für die pixelweise Beleuchtung einer Probe (5) als auch für den pixelweisen Empfang der von der Probe (5) reflektierten und gestreuten Strahlung angeordnet ist.

## Beschreibung

Die Erfindung betrifft ein Verfahren zum Rastern bei der konfokalen Mikroskopie und ein konfokales Mikroskop, wie es insbesondere zur mikroskopischen Gestaltsvermessung bzw. zur Vermessung von Oberflächenstrukturen in der 3D-Meßtechnik, Mikrosystemtechnik u.a. zur Qualitätskontrolle verwendet wird.

In der konfokalen Mikroskopie wird zur Gestaltsvermessung bzw. zur Vermessung von Oberflächenstrukturen ein fokussuchendes Verfahren angewendet, bei dem die beugungsbedingte Intensitäts- bzw.Auflösungsverschlechterung eines defokussierten optischen Systems ausgenutzt wird, indem der Verlauf der gemessenen Intensität oder des Bildkontrastes für einen Bildpunkt über verschiedene Fokuseinstellungen verfolgt wird.

Bei einem scannenden konfokalen Mikroskop, das die Objektpunkte einer Probenoberfläche seriell abtastet, werden die außerhalb des Fokus liegenden Strukturen bei der Abbildung durch Blenden in optisch konjugierten Orten des Strahlenganges unterdrückt. Die beleuchtungsseitige Blende wird über eine Beleuchtungsoptik auf der Probenoberfläche als Punkt abgebildet. Die Abbildungsoptik bildet den reflektierten Punkt auf eine zweite Blende ab, hinter der sich der Detektor befindet. Die Kombination der beiden Blenden unterdrückt Streulicht und nicht konfokale Lichtstrahlen, die bei einer konventionellen Optik vom Detektor miterfaßt würden. Bei Verwendung eines Lasers als Punktlichtquelle wird eine annähernde Kohärenz des Lichtes erreicht. Mit einem konfokalen Mikroskop ist es auf optischem Wege möglich, ein Objektvolumen in senkrecht zur optischen Achse liegende Ebenen zu schneiden, aus denen mittels digitaler Bildverarbeitung ein dreidimensionales Volumen- oder Oberflächenmodell rekonstruiert werden kann. Streulicht benachbarter Strukturen wird unterdrückt.

Alle bisher bekannten Verfahren zur Rasterung bei konfokalen Mikroskopen nutzen nur einen Lichtpunkt zur Abrasterung der Probenoberfläche. Damit müssen alle Punkte der gewählten Probenoberfläche zeitlich nacheinander spalten- und zeilenweise abgerastert werden. Es wird ein unbefriedigend hoher Zeitaufwand benötigt (T.R.Corle, G.S.Kino: "Confocal Scanning Optical Microscopy and Related Imaging Systems", Academic Press, San Diego, USA, 1996).

Die Rasterung der Oberfläche einer Probe erfolgt bekannterweise
mittels einer Lochmaske in Form einer Nipkow-Scheibe
mittels Monomodefasern
mittels dreh- oder kippbarer makroskopischer Spiegel
mittels beweglicher Objektive oder Objektivteile/Linsen
mittels mechanischer x- und y-Verstellung der Probe oder der gesamten Mikroskopeinheit
mittels akustooptischer Modulatoren.

Der Erfindung liegt die Aufgabe zugrunde, ein gattungsgemäßes Verfahren und ein konfokales Mikroskop zu entwickeln, mit denen eine einfache, kostengünstige, zuverlässige und schnelle Rasterung von Probenoberflächen/Objektoberflächen gewährleistet sind.

Diese Aufgabe wird erfindungsgemäß durch die Merkmale der Ansprüche 1 und 5 gelöst. Danach wird die Probenoberfläche innerhalb des Sichtfeldes des konfokalen Mikroskops gleichzeitig von mindestens zwei Strahlungspunkten spalten- und zeilenweise abgerastert, wobei die Strahlungspunkte innerhalb einer Kette oder einer Matrix so angeordnet sind, daß selbst bei der eingegrenzten Rasterbewegung der Kette oder der Matrix das gesamte Sichtfeld des Mikroskops ohne Lücken abgerastert wird. Ein besonderer Vorteil der Erfindung besteht darin, daß durch das Abrastern der Probenoberfläche mit einer Menge aus mindestens zwei Lichtpunkten die Zeit zur Abrasterung einer im Sichtfeld eines konfokalen Mikroskops befindlichen Probenoberfläche mindestens halbiert wird.

Wird eine Kette oder eine Matrix von n Lichtpunkten, d.h. eine regelmäßige lineare oder flächenhafte Anordnung von n Lichtpunkten, zur Abrasterung verwendet, so reduziert sich die Rasterzeit um das Reziproke der Lichtpunktzahl n, also unter gegebenen Voraussetzungen auf 1/n der Rasterzeit eines Lichtpunktes. Die Maximalzahl der Lichtpunkte, die zur Abrasterung einer Probenoberfläche sinnvoll genutzt werden kann, richtet sich nach der Ausdehnung des Lichtflecks, den ein gegebener scharfer Lichtpunkt von der Probenoberfläche auf der Detektorfläche erzeugt.

Die x- und y-Rasterung der Probenoberfläche erfolgt bei dem konfokalen Mikroskop nach der Erfindung mittels eines Mikrospiegelarrays, wobei ein Teil, insbesondere die eine Hälfte des Mikrospiegelarrays anstelle einer Lochblende/Lochmaske vor dem Detektor angeordnet ist. Damit ist ein wesentlicher Zeitgewinn gewährleistet gegenüber der Abrasterung nach dem Stand der Technik mit nur einem Lichtpunkt. Die Probenoberfläche wird nicht mehr punktweise, sondern matrixweise oder zumindestens zeilenweise abgerastert.

Zweckmäßige Ausgestaltungen der Erfindung sind in den Unteransprüchen enthalten.

Die Erfindung soll nachstehend anhand von Ausführungsbeispielen näher erläutert werden. In der zugehörigen Zeichnung zeigen
- Fig. 1:: die Prinzipdarstellung eines bekannten konfokalen Mikroskops,
- Fig. 2:: die schematische Darstellung eines konfokalen Mikroskops nach der Erfindung mit einer Kette von drei Strahlungspunkten,
- Fig. 3:: die schematische Darstellung des Zusammenhanges zwischen den Gitterkonstanten einer Strahlungspunktmatrix und den Hauptachsen der Beugungsfigur,
- Fig. 4:: die schematische Darstellung einer Lichtpunktmatrix aus Kreisliniengitter und Strahlengitter,
- Fig. 5:: die schematische Darstellung eines ersten Ausführungsbeispiels eines konfokalen Mikroskops mit einem digitalen Mikrospiegelarray,
- Fig. 6:: die schematische Darstellung eines zweiten Ausführungsbeispiels eines konfokalen Mikroskops mit einem digitalen Mikrospiegelarray und
- Fig. 7:: die schematische Darstellung eines dritten Ausführungsbeispiels eines konfokalen Mikroskops mit einem digitalen Mikrospiegelarray.

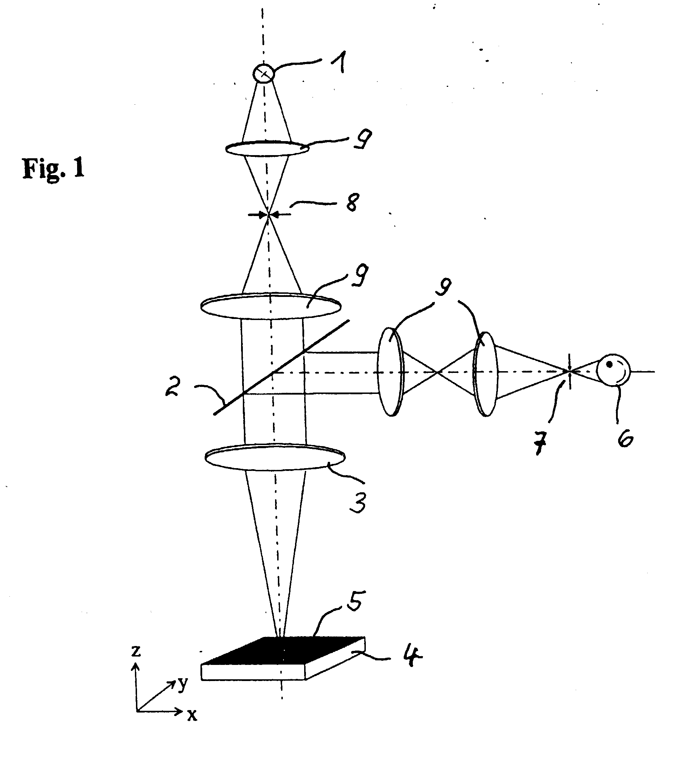

Entsprechend der Prinzipdarstellung in der Fig. 1 besteht ein konfokales Mikroskop aus einer Strahlungsquelle 1 mit Linsen 9 und Blende 8 zur Erzeugung einer punktförmigen Strahlung, einem Strahlteiler 2, einem Probentisch 4 mit einer Probe 5 zur Verschiebung der Probe 5 in x-, y- und z-Richtung, einem Detektor 6 und einer Lochblende 7.

Im Ausführungsbeispiel wird als Strahlung sichtbares Licht verwendet.

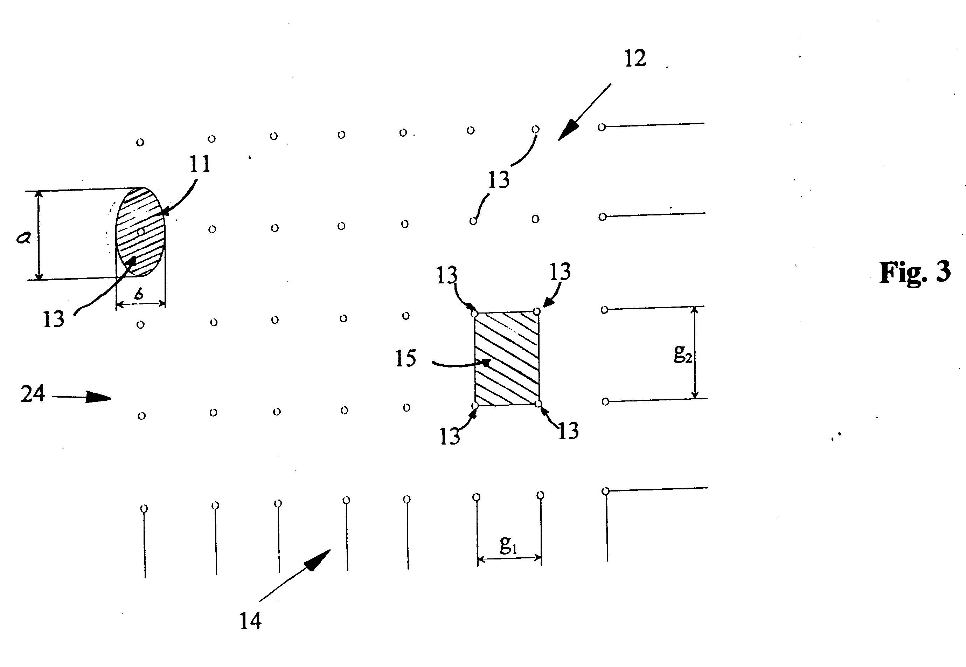

Die punktförmige Strahlungsquelle 1 wird über die Linsen 9, die Blende 8, den Strahlteiler 2, z.B. ein halbdurchlässiger Spiegel, als Lichtspot auf der Oberfläche der Probe 5 abgebildet. Die von der Probe 5 reflektierte und gestreute Strahlung wird durch die gleiche Optik erfaßt und auf der Lochblende 7 abgebildet, die vor dem Detektor 6 angeordnet ist, so daß der Beleuchtungs- und der Detektionsstrahlengang die gleiche Brennweite haben, beide Strahlengänge sind konfokal. Die Abbildung des Lichtspots von der Probenoberfläche 5 auf die Lochblende 7 vor dem Detektor 6 garantiert, daß das Lichtsignal genau dann maximal ist, wenn sich die Probenoberfläche 5 genau in der Brennebene des Objektivs 3 befindet. Die Lochblende 7 ist so dimensioniert, daß nur der zentrale Teil des sogenannten Beugungsscheibchens 11 (Fig. 3) auf den Detektor 6 gelangt, so daß eine sehr scharfe Abbildung gewährleistet ist.

Wird der Abstand der Probe 5 zum Objektiv 3 verändert, dann durchläuft das Lichtsignal eine "gauss-ähnliche" Kurve. Das Maximum dieser Kurve entspricht genau der Brennebene des Objektivs 3 bzw. der größten Schärfe der optischen Abbildung. Der eigentliche Bildaufbau wird erreicht, indem die Probe 5 innerhalb der Brennebene des Objektivs 3 in x- und in y-Richtung verschoben bzw. gescannt wird. Durch die Speicherung der x-, y- und z-Koordinaten sowie der Intensität der reflektierten und gestreuten Strahlung wird das Bild der Probenoberfläche 5 erhalten. Das detektierte Signal wird als elektrisches Signal von einem nicht dargestellten Rechner mit entsprechender Signalverarbeitung aufgenommen. Der Probentisch 4 wird in seiner Bewegung entlang der x-, y- und z-Koordinaten ebenfalls durch einen Rechner gesteuert. Die Steuerung der Probenoberfläche 5 in z-Richtung bzw. in der Höhe erfolgt so, daß die Probenoberfläche 5 unabhängig vom Höhenprofil immer im Tiefenschärfebereich des Objektivs 3 bleibt. Die Verschiebung der Probe 5 in x- und y-Richtung erfolgt, um die laterale Bildinformation zu erhalten.

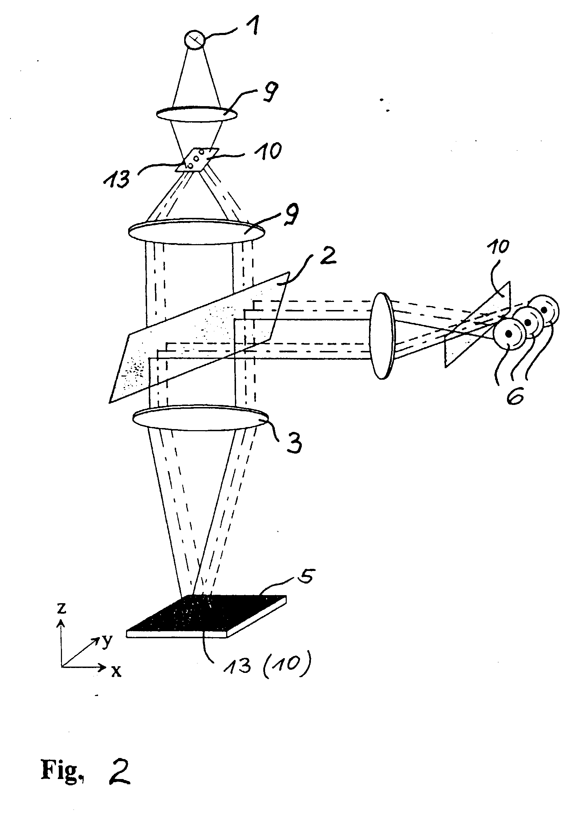

Alle bisherigen Verfahren zur Rasterung nutzen nur einen Lichtpunkt zur Abrasterung der Probenoberfläche. Nach der Erfindung wird entsprechend der Fig. 2 eine Kette 10 oder eine Matrix 12 von n Lichtpunkten 13 zur Abrasterung verwendet, um die Rasterzeit wesentlich zu reduzieren.

Die Fig. 2 zeigt in einer schematischen Darstellung eines konfokalen Mikroskops nach der Erfindung , eine Kette 10 von drei Strahlungspunkten 13, die zum Beispiel durch Mikrospiegel gebildet sind und die zur Rasterung verwendet werden. Die Kette 10 von drei Strahlungspunkten 13 wird in der Funktion der Blende 8 nach Fig. 1 zur Realisierung von drei punktförmigen Strahlungspunkten 13 durch die Strahlungsquelle 1 eingesetzt. Auf der Probenoberfläche 5 wird die Kette 10 durch drei Strahlungspunkte 13 abgebildet und reflektiert und gestreut auf der Kette 10 vor den Detektoren 6 abgebildet.

Die Maximalzahl der Lichtpunkte 13, die zur Abrasterung einer Probenoberfläche sinnvoll genutzt werden kann, richtet sich nach der Ausdehnung des Lichtflecks 11 (Fig. 3), den ein gegebener scharfer Lichtpunkt 13 von der Probenoberfläche 5 auf der Detektorfläche 6 erzeugt.

Aufgrund der Welleneigenschaften des Lichts, der Beugung an Kanten und Blenden, der Streuung in den verschiedenen Medien und an Grenzflächen, der Inhomogenitäten im Material, der unerwünschten Reflektionen, der Abbildungsfehler der Optik, der Interferenzerscheinungen usw., wird selbst ein ideal punktförmiger Lichtfleck von der Probenoberfläche 5 als ausgedehnter Lichtfleck (Beugungsscheibchen) 11 auf der Detektorfläche 6 abgebildet (Fig. 3).

Die Ausdehnung des Lichtflecks 11, den ein gegebener scharfer Lichtpunkt 13 von der Probenoberfläche 5 auf der Detektorfläche 6 erzeugt, ist für den minimalen Abstand der Lichtpunkte 13 in der Lichtpunktmatrix 12 entscheidend. Der kleinste Abstand der Lichtpunkte 13 ist also gleich dem Durchmesser der realen Beugungsfigur 11 auf der Detektorfläche 6 (Fig. 3).

Die Maximalzahl der Lichtpunkte 13 in der Lichtpunktmatrix 12 ergibt sich demnach aus dem Quotienten des Flächeninhalts des Sichtfeldes des konfokalen Mikroskops auf der Probenoberfläche 5 und dem Quadrat des beugungsbestimmten kleinsten Abstandes der Lichtpunkte 13.

Die Fig. 3 zeigt den Zusammenhang zwischen den Gitterkonstanten g1 und g2 der Liniengitter 14, 24 der Strahlungspunktmatrix 12 und den Hauptachsen a, b der Beugungsfigur 11.

In der Fig. 3 besteht die Strahlungspunktmatrix (Lichtpunktmatrix) 12 aus dem Liniengitter 14, bestehend aus acht senkrechten Reihen von Lichtpunkten 13, und aus dem Liniengitter 24, bestehend aus fünf waagerechten Reihen von Lichtpunkten 13. Jeder Lichtpunkt 13 bildet eine Beugungsfigur 11 mit den Hauptachsen a und b. Die Gitterkonstante g1 des Liniengitters 14 steht zur Hauptachse b der Beugungsfigur 11 in einer Beziehung g1 ≥ b, die Gitterkonstante g2 des Liniengitters 24 steht zur Hauptachse a der Beugungsfigur 11 in einer Beziehung g2 ≥ a.

Die Anordnung der Lichtpunkte 13 muß regelmäßig, für jede Dimension der Fläche periodisch sein. D.h., die Lichtpunkte 13 müssen in den Schnittpunkten eines Flächengitters, das im einfachsten Falle aus den zwei gekreuzten Liniengittern 14, 24 mit jeweils eigener Periodenlänge besteht (charakteristischer, konstanter Abstand der Linien, Gitterkonstante), angeordnet sein. Das kleinste Flächenelement dieses Flächengitters, das, ausgehend von einem Lichtpunkt 13, von den nächsten benachbarten Lichtpunkten 13 bestimmt wird, heißt Elementarzelle 15 des Flächengitters.

Die Rasterbewegung der gesamten Lichtpunktmatrix 12 erfolgt nur innerhalb einer Elementarzelle 15. Aufgrund der Periodizität des Flächengitters, dessen Schnittpunkte die Lichtpunktmatrix 12 bilden, wird trotz dieser eingeschränkten Grenzen der Rasterbewegung das gesamte Sichtfeld des konfokalen Mikroskops auf der Probenoberfläche 5 abgerastert.

Das trifft nicht nur auf den eingeschränkten Wellenlängenbereich des sichtbaren Lichtes zu, sondern auf den gesamten Wellenlängenbereich von Strahlung allgemein.

Die Strahlungspunktmatrix 12 nach der Fig. 3 kann in verschiedenen geometrischen Anordnungen ausgeführt sein.

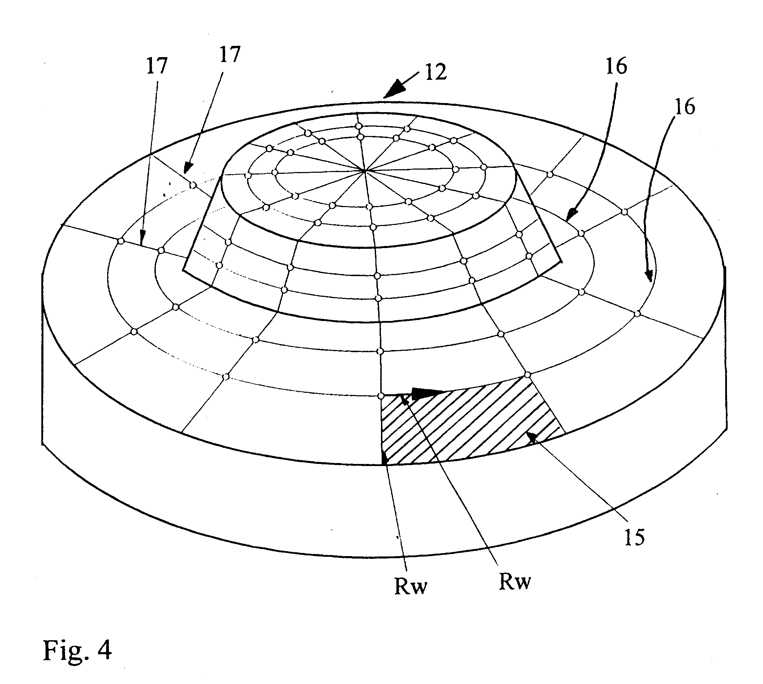

In der Fig. 4 ist eine Strahlungspunktmatrix 12 aus Kreisliniengittern 16 und aus Strahlengittern 17 gebildet. Die Rasterbewegung Rw in Pfeilrichtung innerhalb einer Elementarzelle 15 erlaubt die Erfassung rotationssymmetrischer Teile, z.B. von Zylinderinnenflächen.

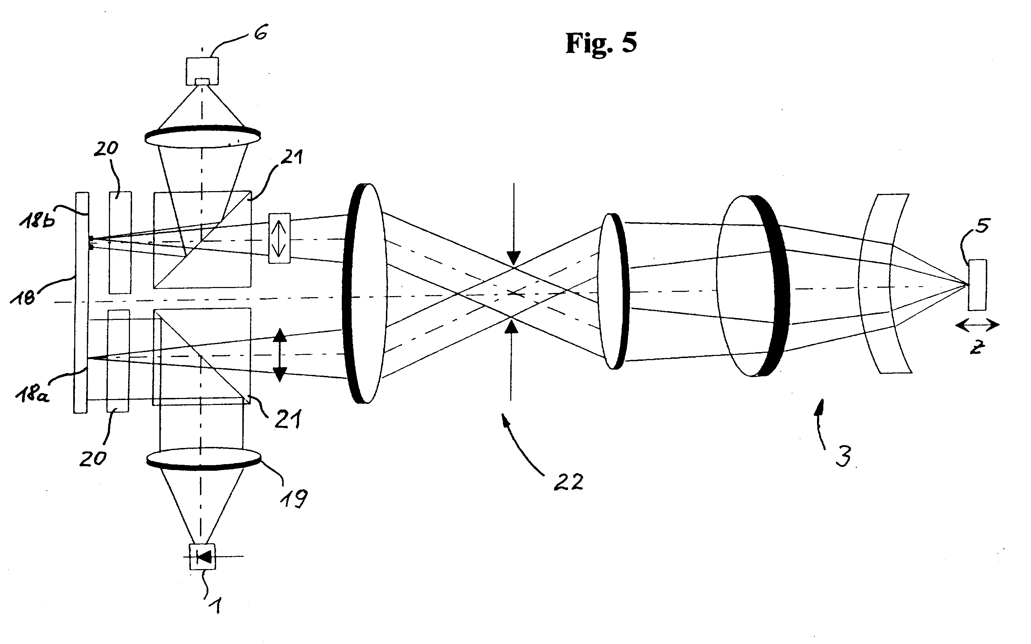

In der Fig. 5 ist eine erste Ausführungsform eines konfokalen Mikroskops nach der Erfindung schematisch dargestellt, bei dem Mikrospiegelarrays 18 zur Abrasterung von Probenoberflächen 5 verwendet sind.

Die Probe 5 kann in z-Richtung in einem definierten Verfahrweg bewegt werden. Das Mikrospiegelarray 18 erfüllt eine Doppelfunktion. Dazu ist das Mikrospiegelarray 18 in einen Teil 18a und in einen Teil 18b geteilt, vorzugsweise je in eine Hälfte des gesamten Arrays 18. Die Hälfte 18a des Arrays 18 übernimmt die x- und die y-Rasterung der Probenoberfläche und wird über einen Kollimator 19 mit kollimierter Strahlung ausgeleuchtet. Die Hälfte 18b des Arrays 18 übernimmt die Funktion der ortsveränderlichen Lochmaske/Blende entsprechend der Darstellung in Fig. 1.

Die genaue Abbildung zwischen dem Mikrospiegelarray 18 und der Probe 5 erfolgt über ein telezentrisches Objektiv 22. Die Probe 5 wird nicht punktweise, sondern matrixweise abgerastert. Die Kantenlänge der Matrix wird dabei durch den Durchmesser des Beugungsscheibchens (Airy-Scheibchens) 11 nach Fig. 3 bestimmt. Mit dieser Art der Abrasterung entsteht gegenüber den herkömmlichen konfokalen Mikroskopen ein erheblicher Zeitvorteil.

Durch die Anwendung von polarisierenden Strahlteilern 21 in Verbindung mit sogenannten γ/4-Scheibchen 20 wird gewährleistet, daß eine vollständige Strahlumlenkung an den polarisierten Strahlteilern 21 erfolgt.

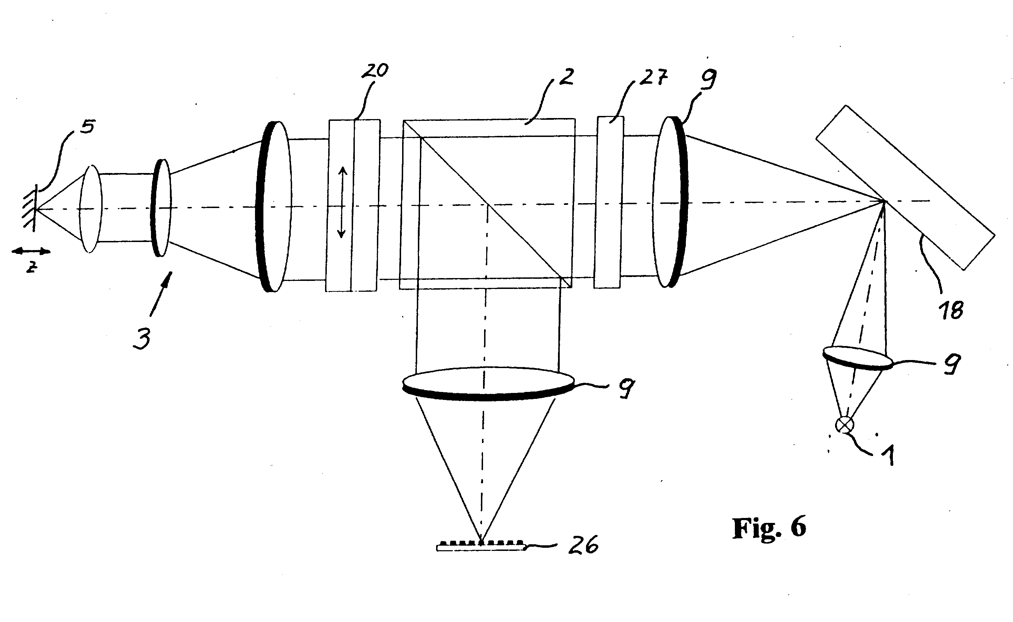

In der Fig. 6 ist ein zweites Ausführungsbeispiel des konfokalen Mikroskops unter Verwendung eines digitalen Mikrospiegelarrays 18 gezeigt.

Entsprechend der Darstellung in der Fig. 6 wird von der Strahlungsquelle 1 die Strahlung auf das Mikrospiegelarray 18 kollimiert. Das Mikrospiegelarray 18 steuert über einzeln geschaltete Mikrospiegel im Sinne der Erfindung die Strahlung in den Projektionsstrahlengang, der gebildet wird von der Linse 9, dem Polarisationsfilter 27, dem Strahlteiler 2, dem y/4-Scheibchen 20 und dem Objektiv 3. Auf der Probe 5 wird das Muster der angesteuerten Mikrospiegel abgebildet. Die von der Probe 5 ausgehende Strahlung wird vom Objektiv 3 erfaßt und über den Strahlteiler 2 sowie die Linse 9 auf die CCD-Kameramatrix 26 abgebildet. Durch die Aktivierung der jeweils zentralen Pixel innerhalb eines Beugungsscheibchens nach Fig. 3 wird dieselbe Funktion erfüllt wie die Ansteuerung einzelner Mikrospiegel aus dem Array 18b in der Fig. 5.

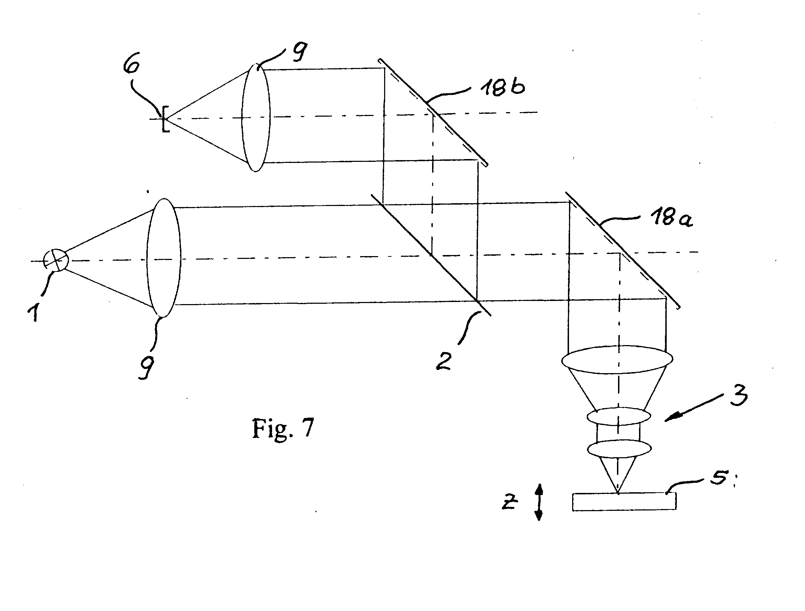

In der Fig. 7 ist ein drittes Ausführungsbeispiel des konfokalen Mikroskops unter Verwendung eines digitalen Mikrospiegelarrays gezeigt.

Im Gegensatz zum Strahlengang nach der Fig. 5 wird die von der Probe 5 kommende Strahlung über den Teil 18b des Mikrospiegelarrays 18 lediglich umgelenkt und auf dem Teil 18a des Mikrospiegelarrays 18 scharf abgebildet. Das Mikrospiegelarray 18a erfüllt hier den gleichen Zweck wie der Teil 18b des Mikrospiegelarrays 18 in der Fig. 5.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

- 1: Strahlungsquelle (Lichtquelle)
- 2: Strahlteiler
- 3: Objektiv
- 4: Probentisch
- 5: Probe
- 6: Detektor
- 7: Blende
- 8: Blende
- 9: Linse
- 10: Kette von Strahlungspunkten
- 11: Lichtfleck (Beugungsfigur)
- 12: Strahlungspunktmatrix
- 13: Lichtpunkt
- 14: Liniengitter
- 15: Elementarzelle
- 16: Kreisliniengitter
- 17: Strahlengitter
- 18: Mikrospiegelarray
- 18a: Teil
- 18 b: Teil
- 18 c: Mikrospiegel
- 18 d: Mikrospiegel
- 19: Kollimator
- 20: y/4-Plättchen
- 21: Polarisationsfilter
- 22: telezentrisches Objektiv
- 23: Planachromat
- 24: Liniengitter
- 25: Optik
- 26: CCD-Kamera
- 27: Polarisationsfilter

- a, b: Hauptachsen
- g1, g2: Gitterkonstante

- Rw: Rasterbewegung

## Patentansprüche

1. Verfahren zum Rastern bei der konfokalen Mikroskopie, dadurch gekennzeichnet, daß die Probenoberfläche (5) innerhalb des Sichtfeldes des konfokalen Mikroskops gleichzeitig von mindestestens zwei Strahlungspunkten (13) spalten- und zeilenweise abgerastert wird, wobei die Strahlungspunkte (13) innerhalb einer Kette (10) oder einer Matrix (12) so angeordnet werden, daß selbst bei der eingegrenzten Rasterbewegung der Kette (10) oder der Matrix (12) das gesamte Sichtfeld des Mikroskops ohne Lücken abgerastert wird.

2. Verfahren nach Anspruch 1, dadurch gekennzeichnet, daß die Probenoberfläche (5) von der maximalen Anzahl von n Strahlungspunkten (13) gleichzeitig abgerastert wird, wobei die Strahlungspunkte (13) in den Schnittpunkten eines regelmäßigen Flächengitters, bestehend aus zwei gekreuzten Liniengittern (14,24) mit eigenem Linienabstand (Periodenlänge, Gitterkonstante) angeordnet sind, wobei der minimale Abstand (Periodenlänge) der Gitterlinien mindestens gleich oder größer als der für das jeweilige Liniengitter (14,24) relevante Durchmesser des Strahlungsflecks auf der Detektorfläche (6) bzw. auf der Blende vor dem Strahlungsdetektor (6) ist, wobei die Maximalzahl n der Strahlungspunkte (13) der Matrix (12) sich aus dem Quotienten des Sichtfeldes des konfokalen Mikroskops und dem Flächeninhalt der Elementarzelle (15) des Flächengitters ergibt und die Rasterbewegung durch die Elementarzelle (15) des Flächengitters eingegrenzt wird.

3. Verfahren nach Anspruch 1, dadurch gekennzeichnet, daß die Probenoberfläche (5) von der maximalen Anzahl von n Strahlungspunkten (13) gleichzeitig abgerastert wird, wobei die Strahlungspunkte (13) in einer Kette (10) angeordnet sind, wobei der minimale Abstand (Periodenlänge) der Strahlungspunkte (13) mindestens gleich oder größer als der Durchmesser des Strahlungsflecks auf der Detektorfläche (6) bzw. auf der Blende vor dem Strahlungsdetektor (6) ist, wobei die Maximalzahl n der Strahlungspunkte (13) der Kette (10) sich aus dem Quotienten der Länge des Sichtfeldes des konfokalen Mikroskops und dem minimalen Abstand der Strahlungspunkte (13) ergibt.

4. Verfahren nach den Ansprüchen 1 bis 3, dadurch gekennzeichnet, daß die Form der Kette (10) oder der Matrix (12) an die Symmetrieeigenschaften der Probe (5) oder der Optik angepaßt wird.

5. Konfokales Mikroskop, dadurch gekennzeichnet, daß ein Mikrospiegelarray (18) sowohl für die pixelweise Beleuchtung einer Probe (5) als auch für den pixelweisen Empfang der von der Probe (5) reflektierten und gestreuten Strahlung angeordnet ist.

6. Konfokales Mikroskop nach Anspruch 5, dadurch gekennzeichnet, daß ein Teil (18a) des Mikrospiegelarrays (18) über einen Kollimator (19) ausgeleuchtet ist, daß der andere Teil (18b) des Mikrospiegelarrays (18) über eine Optik (25) mit dem Strahlungsempfänger (6) verbunden ist, daß je zwei zum Mittelpunkt des Mikrospiegelarrays ( 18) punktsymmetrisch gelegene Mikrospiegel (18c, 18d) mit ihrer Reflektionsrichtung zur Optik (22, 23) geschaltet sind, so daß der Beleuchtungsstrahl und der von der Probe (5) reflektierte Empfangsstrahl bzw. jeweils der Zentralstrahl der Strahlungsbündel, in einer Ebene in gleichem Abstand zur optischen Achse liegen.

7. Konfokales Mikroskop nach den Ansprüchen 5 und 6, dadurch gekennzeichnet, daß ein telezentrisches Objektiv (22) in Verbindung vorzugsweise mit einem Planchromat-Objektiv (23), dessen Bildfeldkrümmung zur Ebene korrigiert ist, zur konfokalen Beleuchtung und Abbildung der Probe (5) verwendet wird.

8. Konfokales Mikroskop nach Anspruch 7, dadurch gekennzeichnet, daß zur konfokalen Beleuchtung und Abbildung der Probe (5) mehrere Mikrospiegelpaare verwendet werden, deren Empfängerspiegel jeweils in einer Matrix so angeordnet sind, daß die Kantenlängen der Elementarzelle der Matrix größer oder gleich dem Durchmesser des Streuscheibchens (Airy-Scheibchen) der von der Probe (5) reflektierten Strahlung sind.

9. Konfokales Mikroskop nach den Ansprüchen 5 bis 8, dadurch gekennzeichnet, daß polarisierte Strahlteiler in Verbindung mit γ/4-Plättchen (20) jeweils für den Beleuchtungsstrahlengang und für den Empfängerstrahlengang zur möglichst verlustfreien Umlenkung des polarisierten und des kollimierten Strahls in die konfokale Optik bzw. des vom Mikrospiegelarray zurückreflektierten Empfangsstrahls aus der konfokalen Optik zum Empfänger verwendet werden.
